# EUROPÄISCHE PATENTSCHRIFT

(11) **EP 1 601 544 B1**
(45) Veröffentlichungstag und Bekanntmachung des Hinweises auf die Patenterteilung: **15.10.2008**
(21) Anmeldenummer: 04711565.4
(22) Anmeldetag: 17.02.2004
(51) Int. Cl.: B60J 7/20

(54) **CABRIOLET-FAHRZEUG**
CONVERTIBLE VEHICLE
VOITURE DECAPOTABLE

(30) Priorität: 03.03.2003 DE 10309366
(43) Veröffentlichungstag der Anmeldung: 07.12.2005
(73) Patentinhaber: Wilhelm Karmann GmbH, 49084 Osnabrück (DE)
(72) Erfinder: BAUMEIER, Andreas, 49143 Bissendorf (DE)
(86) Internationale Anmeldenummer: PCT/DE2004/000284
(87) Internationale Veröffentlichungsnummer: WO 2004/078505

(56) Entgegenhaltungen:
- EP-A- 1 281 553
- EP-A- 1 285 802
- DE-A- 10 038 530
- DE-A- 10 051 996
- DE-A- 10 052 001
- DE-A- 19 932 500
- DE-C- 19 756 062

## Beschreibung

Die Erfindung betrifft ein Cabriolet-Fahrzeug mit einem unterhalb eines Deckelteils ablegbaren Dach nach dem Oberbegriff der Ansprüche 1 und 2, wie aus der gattungsgemäßen DE 100 51 996 bekannt ist.

Aus der DE 197 56 062 C1 ist ein Cabriolet-Fahrzeug bekannt, bei dem neben der ersten, heckseitigen Schwenkachse (dort mit dem Bezugszeichen 13 versehen) seitlich zwei separate Hilfsrahmen ohne eine das Fahrzeug durchziehende Querverbindung vorgesehen sind. Diese sind gegenüber der Fahrzeugkarosserie schwenkbar (um die Achse 6) angeordnet. An ihrem der jeweiligen Schwenkachse abgewandten Ende stützen sie einen nach Art einer Kurbel beweglichen Anlenkhebel (dort mit dem Bezugszeichen 4 benannt) ab, der an seinem dem jeweiligen Hilfsrahmen abgewandten Ende ein Mehrgelenk abstützt. Durch diese Konstruktion sind eine Vielzahl von Schwenkgelenken und Bauteilen erforderlich, so daß der Herstellungsaufwand erhöht ist. Die Bewegung des Dekkelteils ist aufgrund der hohen Zahl von Schwenkachsen zudem unspezifisch.

Der Erfindung liegt das Problem zugrunde, ein Cabriolet-Fahrzeug der genannten Art hinsichtlich des Aufbaus und der Kinematik der Deckelteilabstützung zu verbessern.

Die Erfindung löst dieses Problem durch ein Cabriolet-Fahrzeug mit den Merkmalen der Ansprüche 1 und 2. Vorteilhafte Ausgestaltungen des Gegenstandes der Erfindung ergeben sich aus den weiteren Ansprüchen 3 bis 11.

Mit der erfindungsgemäßen Ausgestaltung kann die Anzahl der Bauteile verringert werden. So ist ein zusätzlicher beweglicher Anlenkhebel zwischen einem karosserieseitig gelagerten Hebel und mit dem Deckelteil verbundenen Lenkern entbehrlich. Durch die elastische Verformung des Deckelteils wird eine Bewegung des Deckelteils ermöglicht, die von der mechanischen Anbindung an sich nicht machbar wäre, ohne daß dazu weitere Bauteile vorgesehen werden müßten.

Aufgrund der vorgesehenen Elastizität kann die Fertigung mit erheblichen Toleranzen erfolgen, so daß der Einsatz von Modulen für das Deckelteil und seine Antriebe einfach montierbar ist und die Herstellungskosten sinken.

Durch den im Deckelteil vorgesehen Toleranzausgleich können die Gelenke ohne Konstruktionsänderungen als reine Schwenkgelenke verbleiben, ohne daß eine Translationsbewegung zwischen einzelnen Lenkern oder zwischen diesem und dem Deckelteil erforderlich wäre. Langlöcher, Kulissenführungen oder dergleichen sind dann entbehrlich.

Durch die erfindungsgemäße elastische Verformung im Deckelteil im Übergang zwischen einem im wesentlichen horizontalen und einem im wesentlichen vertikalen Bereich ist es optisch unauffällig möglich, auch eine größere Verformung, beispielsweise um 3° bis 4° im Übergangswinkel, durchführen zu können, so daß auch erhebliche Unterschiede in den Bewegungsbahnen von beabstandet zueinander liegenden Abschnitten des Deckelteils realisiert werden können.

Sofern das Deckelteil im vollständig geöffneten und vollständig geschlossenen zustand verformungsfrei gehalten ist, ist in diesen Stellungen keine Verformung erforderlich; dadurch ist insbesondere eine Dauerbelastung des Deckelteils durch Spannungen vermieden.

Insbesondere können alle mit dem Deckelteil verbundenen Lenker unmittelbar mit einem Schwenklenker, der direkt an der Karosserie angelenkt ist, ohne Zwischenschaltung weiterer Teile in Verbindung stehen.

Weitere Vorteile und Merkmale der Erfindung ergeben sich aus in der Zeichnung dargestellten und nachfolgend erläuterten Ausführungsbeispielen des Gegenstandes der Erfindung.

In der Zeichnung zeigt:
- Fig. 1: eine perspektivische Ansicht eines erfindungsgemäßen Cabriolet-Fahrzeugs von schräg hinten bei geschlossenem Dach und geschlossenem Deckelteil,

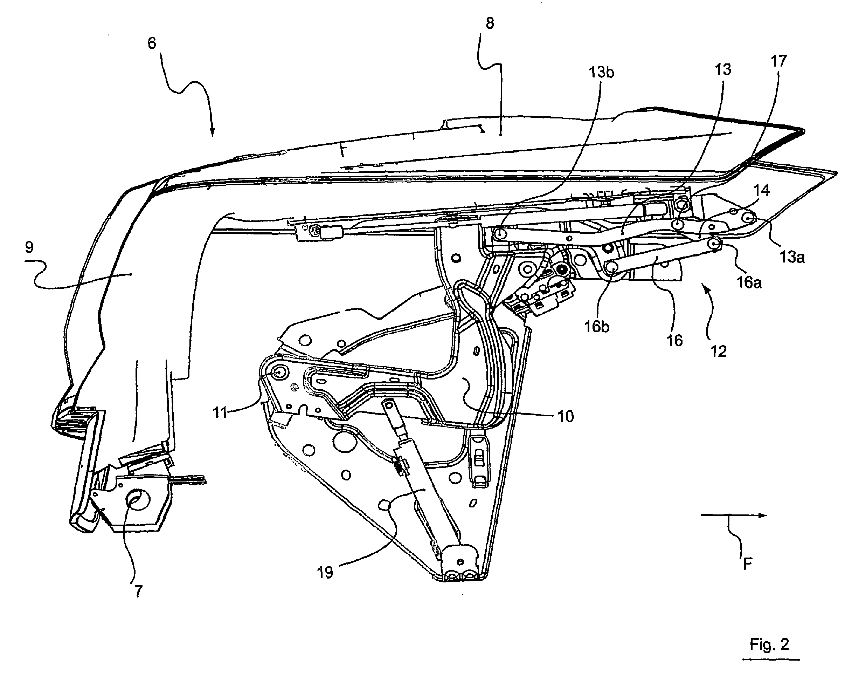

- Fig. 2: eine schematische Seitenansicht des geschlossenen Deckelteils, etwa aus Richtung des Pfeils II in Fig. 1,
- Fig. 3: das Deckelteil nach Fig. 2 während der beginnenden Öffnung zur Freigabe der Durchtrittsöffnung für das Dach,
- Fig. 4: das Deckelteil nach Fig. 3 bei weiter fortschreitender Öffnung,
- Fig. 5: das Deckelteil nach Fig. 2 bei gegensinniger Öffnung zur Freigabe der Beladeöffnung für Gepäck,
- Fig. 6: eine ähnliche Ansicht wie Fig. 5, jedoch aus gegenüberliegender Richtung und mit zusätzlich eingezeichnetem Antriebsorgan,
- Fig. 7: eine Schnittansicht des Deckelteils nach Fig. 2 mit Ausbildung einer verdünnten Sollknickstelle im Bereich des Übergangs zwischen einem im wesentlichen horizontalen vorderen und einen im wesentlichen vertikalen hinteren Abschlußteil,
- Fig. 8: eine schematische Seitenansicht der Schwenkbewegungen von Hilfslenker und Deckelteil mit eingezeichneten Schwenkbahnen der freien Enden.

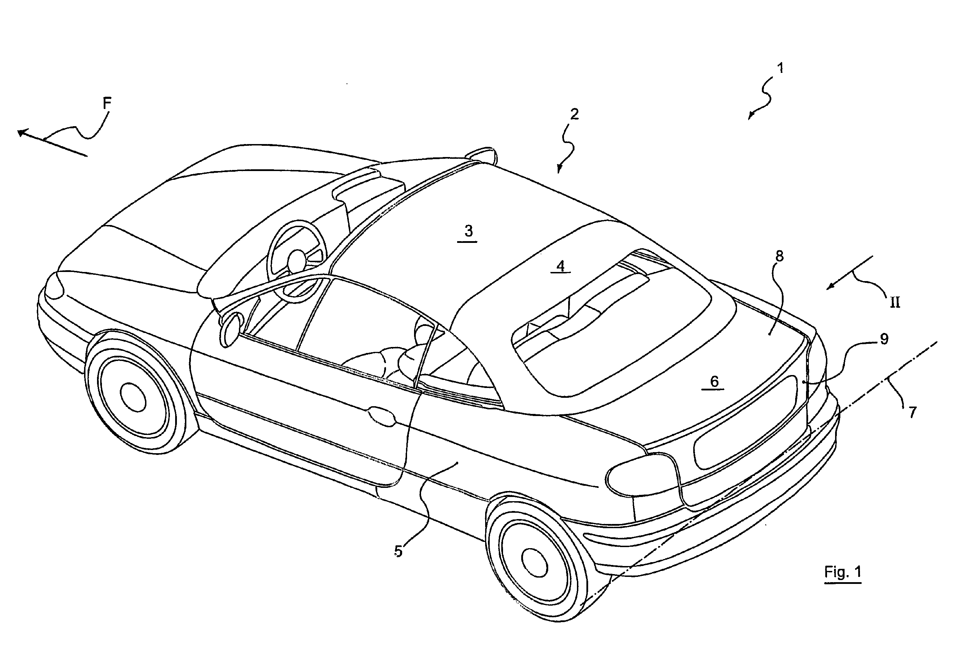

Das in Fig. 1 schematisch dargestellte Cabriolet-Fahrzeug 1 umfaßt ein bewegliches Dach 2, das teilweise oder vollständig aus starren Teilen 3, 4 bestehen kann. Das Dach 2 ist zur Einstellung eines geöffneten Zustands in der Karosserie 5 unterhalb eines Deckelteils 6 ablegbar. Hierfür ist das Deckelteil im Bereich einer ersten heckseitigen Horizontalschwenkachse 7 an der Karosserie 5 schwenkbeweglich angebunden.

Das Deckelteil 6 umfaßt einen im wesentlichen horizontalen vorderen Teil 8, der in Schließstellung das geöffnete Dach 2 überdeckt, und einen gegen die Fahrtrichtung F anschließenden und im wesentlichen vertikalen hinteren Abschlußteil 9. Die Schwenkachse 7 liegt im unteren Bereich des vertikalen Abschlußteils 9.

Des weiteren ist das Deckelteil 6 durch zwei den Fahrzeuglängsseiten zugeordnete seitliche Hilfslenker 10 abgestützt, die an der Karosserie 5 um horizontale Achsen 11 schwenkbar angelenkt sind. Die Achsen 11 liegen in Fahrtrichtung F vor der Horizontalschwenkachse 7 des Deckelteils 6. Diese Hilfslenker 10 sind in Seitenansicht schwanenhalsförmig ausgebildet und tragen an ihren den Schwenkachsen 11 abgewandten freien Enden jeweils ein insgesamt mit 12 bezeichnetes Mehrgelenk als gelenkige Anbindung des Deckelteils 6 an die Hilfslenker 10. Durch die Verwendung der Hilfslenker 10 ist sichergestellt, daß die hintere Schwenkachse 7 nicht als Rohr oder dergleichen die ganze Fahrzeugbreite einnehmen muß, sondern lediglich um eine vertikale Fahrzeuglängsmittelebene zu beiden Seiten jeweils wenige Zentimeter bis etwa 15 Zentimeter erstreckt sein muß, was Gewicht und Bauraum spart.

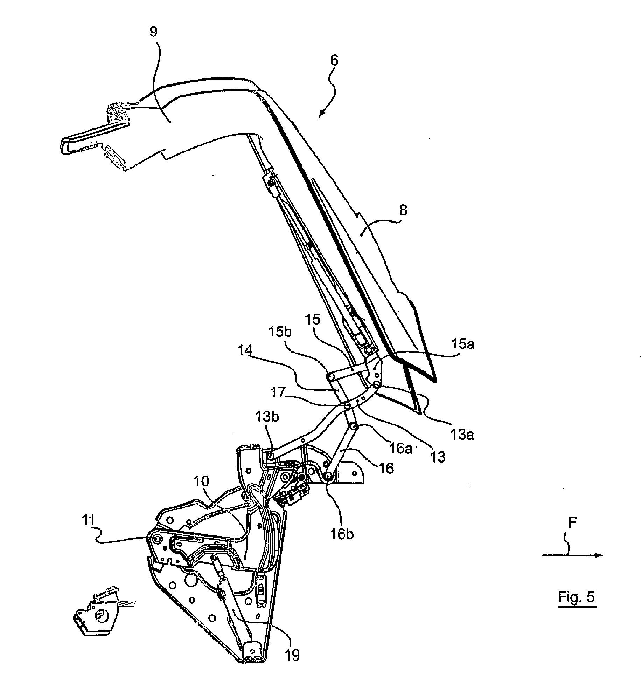

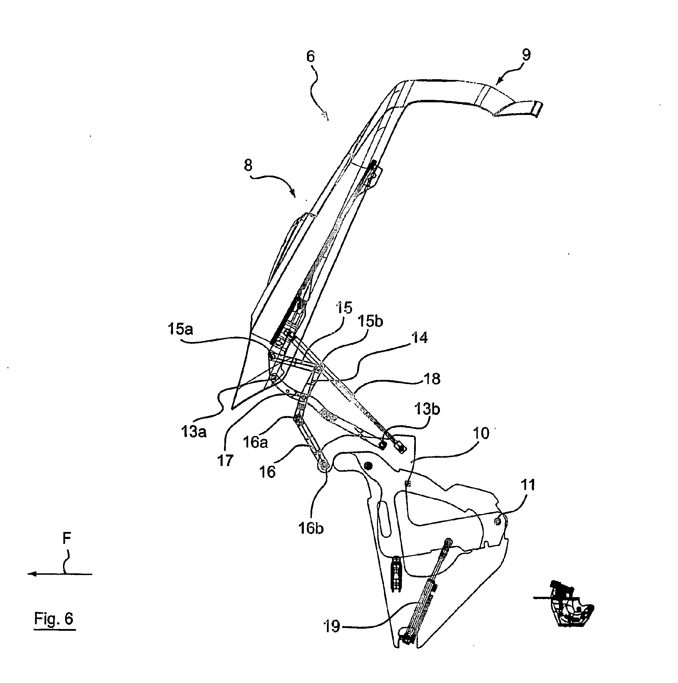

Das Mehrgelenk 12 ist hier ein Siebengelenk, was nicht zwingend ist, und umfaßt jeweils mehrere Lenker 13, 14, 15, 16, wobei ein durchgehender Lenker 13 einenends am Gelenk 13a mit dem Deckelteil 6 und anderenends am Gelenk 13b mit dem Schwenklenker 10 schwenkbeweglich verbunden ist. Dieser Lenker 13 liegt bei geschlossenem Deckelteil 6 im wesentlichen horizontal. Er wird gekreuzt von einem Zwischenlenker 14, der über den oberen Lenker 15 und dessen Gelenke 15a, 15b am Deckelteil 6 und über den unteren Lenker 16 und dessen Gelenke 16a, 16b am Hilfslenker 10 gelenkig angebunden ist und mit dem durchgehenden Lenker 13 über ein Gelenk 17 verbunden ist. Die Gelenke 13a, 13b, 15a, 15b, 16a, 16b und 17 bilden somit das Siebengelenk 12 aus, das zur Freigabe einer Beladeöffnung für Gepäck zunächst einen nahezu Parallelhub des Deckelteils 6 und erst nachfolgend dessen Aufschwenken ermöglicht. In dieser Stellung (Fig. 5, Fig. 6) ist daher die Kopffreiheit unter dem geöffneten Deckelteil 6 gegenüber einem reinen Schwenkgelenk oder einem Viergelenk vergrößert. Zudem bietet das Siebengelenk 12 eine sehr hohe Stabilität. Im geschlossenen Zustand kann das Deckelteil 6 in Fahrtrichtung F weit nach vorne ragen und eine Wasserkante vollständig überdecken.

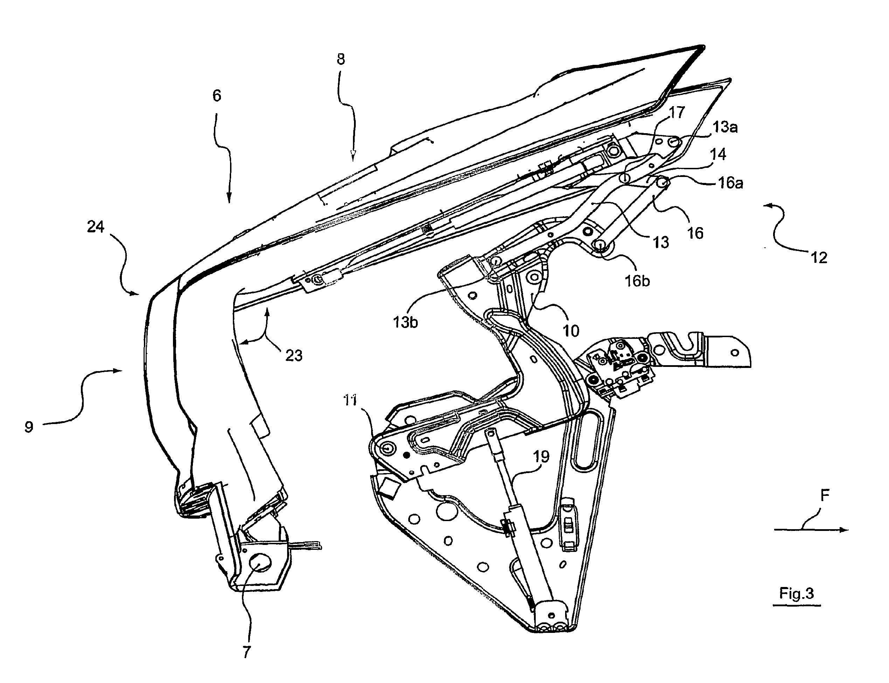

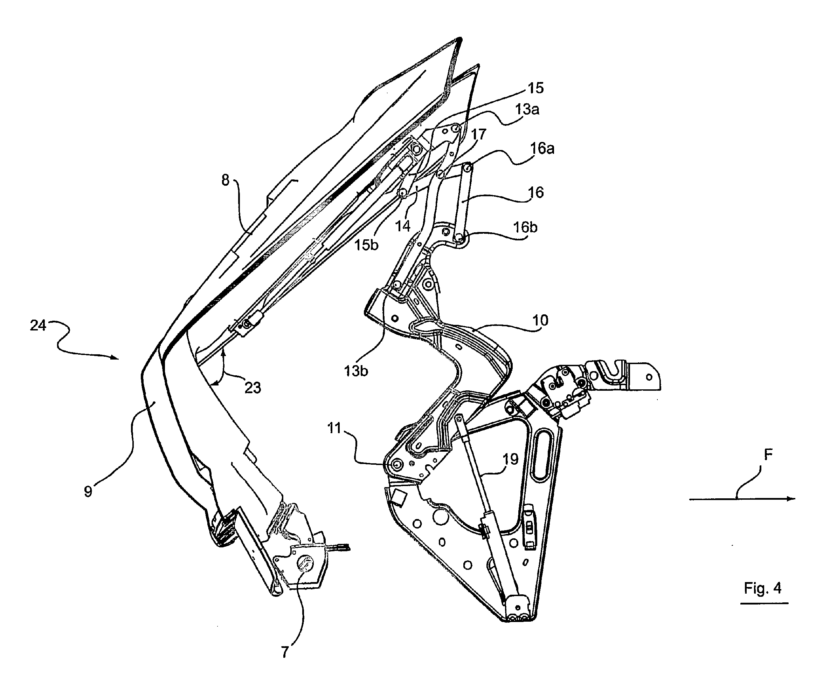

Ein zusätzliches Antriebs- oder antriebsunterstützendes Organ 18, etwa ein Gasdruck- oder Hydraulikzylinder, kann zwischen Deckelteil 6 und Hilfslenker 10 vorgesehen sein, um das Mehrgelenk 12 bei Aufschwenken des Deckelteils 6 zur Freigabe der Beladeöffnung für Gepäck zu öffnen (in Fig. 6 eingezeichnet). Bei Öffnung zur Freigabe der Durchtrittsöffnung für das Dach (Fig. 3, Fig. 4) kann hingegen das Antriebsorgan 18 freigeschaltet sein.

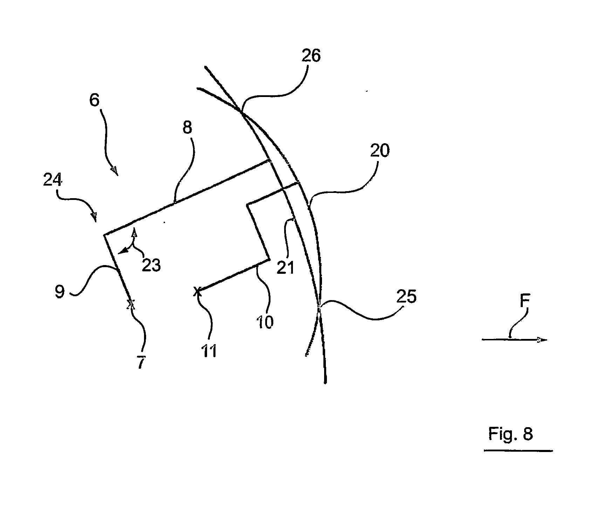

Die Öffnung des Deckelteils 6 zur Freigabe der Durchtrittsöffnung für das Dach 2 ist durch ein weiteres Antriebsorgan 19 zwischen der Karosserie 5 und dem Hilfslenker 10 bewirkbar. Durch dessen Ausfahren wird der Hilfslenker 10 um die Achse 11 heckwärts und aufwärts verschwenkt. Über die Anbindung durch das Mehrgelenk 12 wird gleichzeitig das Deckelteil 6 um die heckwärtige Achse 7 aufgeschwenkt. Dadurch, daß die Achsen 7 und 11 voneinander beabstandet liegen, schwenken die freien Enden des Deckelteils 6 einerseits und der Hilfslenker 10 andererseits bei starrer Ausbildung auf unterschiedlichen Kreisbahnen 20, 21 (Fig. 8).

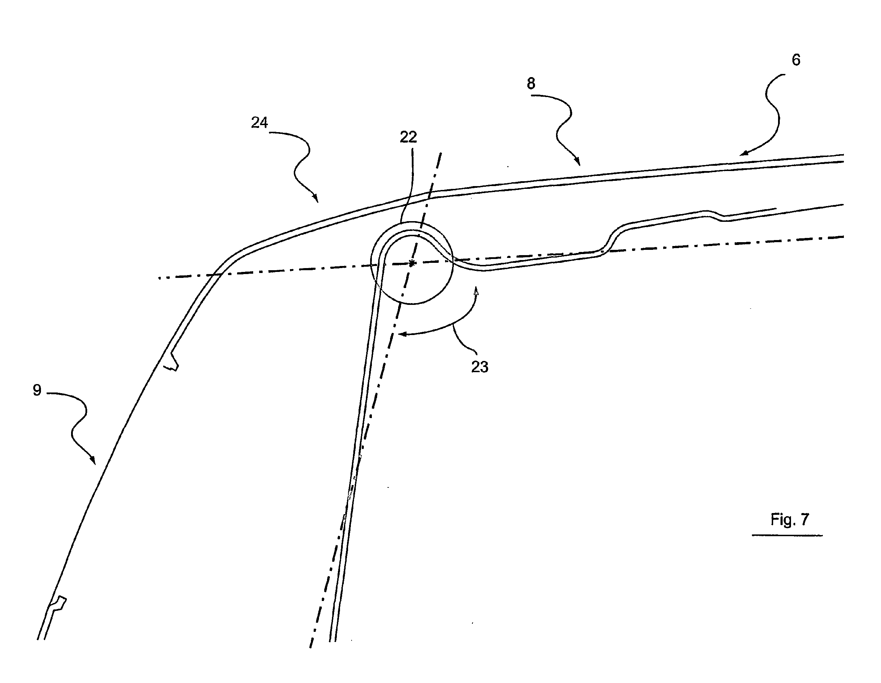

Um diese kinematische Schwierigkeit, die zu einem Verkanten der Teile 6 und 10 während der Bewegung führen würde, mit minimalem Aufwand zu lösen, ist ein Toleranzausgleich derart vorgesehen, daß das Deckelteil 6 an einer verdünnten Sollbiegestelle 22 im Bereich des Übergangs zwischen dem im wesentlichen horizontalen Bereich 8 und dem im wesentlichen vertikalen Bereich 9 in und/oder gegen die Richtung des Pfeils 23 elastisch verformbar ist (Fig. 7). Die Verformbarkeit kann mehrere Grad, typisch etwa 3° bis 5°, betragen. Dadurch entsteht im Deckelteil 6 durch dessen Elastizität ein weiteres Gelenk 24, das zusammen mit der Anlenkung des Deckelteils 6 an der Heckschwenkachse 7 sowie den Gelenken 13a, 13b des durchgehenden Lenkers 13 des Mehrgelenks 12 und der Schwenkachse 11 des Hilfslenkers 10 eine Fünfgelenkkette bildet. Der Deckel ist 6 zur Sicherstellung seiner elastischen Verformbarkeit aus einem Kunststoff, etwa SMC, gebildet.

Zusätzlich oder alternativ zum Toleranzausgleich im Deckelteil 6 ist auch ein Toleranzausgleich im Mehrgelenk 12 möglich, etwa dadurch, daß die Achsen der Gelenke 15a, 13a, 13b, 16b in Langlöchern geführt würden, wodurch das Mehrgelenk 12 insgesamt verschieblich würde.

In Fig. 8 sind die Kreisbahnen 21 des freien Endes des Deckelteils 6, das um die Achse 7 schwenkt, und 20 des freien Endes des Hilfslenkers 10, der um die Achse 11 schwenkt, schematisch dargestellt. Lediglich im vollständig geschlossenen Zustand des Deckelteils 6 und in dessen vollständig geöffnetem Zustand kreuzen sich diese (Kreuzungspunkte 25 und 26 der Kreisbahnen 20, 21). In diesen beiden Stellungen braucht daher vorteilhaft der Toleranzausgleich nicht wirksam zu sein, sondern das Deckelteil 6 kann spannungs- und verformungsfrei gehalten sein.

In der dazwischen liegenden Öffnungs- oder Schließphase wird durch den Toleranzausgleich - hier im Deckelteil 6 - ein in Fig. 8 für starre Teile gezeigtes Auseinanderlaufen der Bahnen 20 und 21 vermieden, wodurch ein Verkanten der Bewegung verhindert wird. Das freie Ende des Deckelteils 6 kann durch Auf- oder Zubiegen in oder gegen die Richtung des Pfeils 23 die effektive Länge des Teils 8 verändern und dessen Bewegungsbahn 21 somit an die Bahn 20 anpassen.

## Patentansprüche

1. Cabriolet-Fahrzeug (1) mit einem im rückwärtigen Fahrzeugbereich unterhalb eines Deckelteils (6) ablegbaren Dach (2), wobei das Deckelteil wahlweise zur Freigabe einer Beladeöffnung für Gepäck oder zur Freigabe einer Durchtrittsöffnung für das Dach (2) geöffnet werden kann und für letztgenannte Öffnung eine erste Schwenkachse (7) im Bereich einer heckseitigen Abschlußkante des Deckelteils (6) und zumindest den Fahrzeuglängsseiten zugeordnete seitliche Hilfslenker (10) vorgesehen sind, die über Gelenkanbindungen (12) mit dem Deckelteil (6) verbunden sind,
**dadurch gekennzeichnet,**
**daß** im Deckelteil (6) ein Toleranzausgleich vorgesehen ist, der zumindest während des Verschwenkens des Deckelteils (6) zur Freigabe der Durchtrittsöffnung für das Dach eine Abweichung der Bahnkurve eines Teils des Deckelteils (6) von einer Kreisbahn (20;21) bewirkt, und wobei das Deckelteil (6) elastisch verformt wird.

2. Cabriolet-Fahrzeug (1) mit einem im rückwärtigen Fahrzeugbereich unterhalb eines Deckelteils (6) ablegbaren Dach (2), wobei das Deckelteil wahlweise zur Freigabe einer Beladeöffnung für Gepäck oder zur Freigabe einer Durchtrittsöffnung für das Dach (2) geöffnet werden kann und für letztgenannte Öffnung eine erste Schwenkachse (7) im Bereich einer heckseitigen Abschlußkante des Deckelteils (6) und zumindest den Fahrzeuglängsseiten zugeordnete seitliche Hilfslenker (10) vorgesehen sind, die über Gelenkanbindungen mit dem Deckelteil (6) verbunden sind, wobei in den Gelenkanbindungen (12) ein Toleranzausgleich vorgesehen ist, der zumindest während des Verschwenkens des Deckelteils (6) zur Freigabe der Durchtrittsöffnung für das Dach eine Abweichung der Bahnkurve eines Teils der Gelenkanbindung (12) von einer Kreisbahn (20; 21) bewirkt,
**dadurch gekennzeichnet,**
**daß** hierbei das Deckelteil (6) elastisch verformt wird.

3. Cabriolet-Fahrzeug nach einem der Ansprüche 1 oder 2,
**dadurch gekennzeichnet,**
**daß** das Deckelteil (6) einen im geschlossenen Zustand im wesentlichen horizontalen vorderen (8) und einen im wesentlichen vertikalen hinteren Abschlußteil (9) umfaßt, wobei der Winkel zwischen den genannten Teilen (8;9) während der Bewegung des Deckelteils (6) elastisch größenveränderbar (23) ist.

4. Cabriolet-Fahrzeug nach Anspruch 3,
**dadurch gekennzeichnet,**
**daß** die Winkeländerung (23) während der Öffnungsbewegung des Deckelteils (6) mehrere Grad beträgt.

5. Cabriolet-Fahrzeug nach einem der Ansprüche 1 bis 4,
**dadurch gekennzeichnet,**
**daß** das Deckelteil (6) sowohl in geschlossenem als auch in zur Freigabe der Durchtrittsöffnung für das Dach (2) vollständig geöffnetem Zustand verformungsfrei gehalten ist.

6. Cabriolet-Fahrzeug nach einem der Ansprüche 1 bis 5,
**dadurch gekennzeichnet,**
**daß** das Deckelteil (6) aus Kunststoff gebildet ist.

7. Cabriolet-Fahrzeug nach einem der Ansprüche 1 bis 6,
**dadurch gekennzeichnet,**
**daß** die seitlichen Hilfslenker (10) des Deckelteils (6) durch an der Karosserie (5) gelagerte Schwenklenker gebildet sind, an denen als Gelenkanbindungen (12) jeweils mehrere Lenker (13; 14; 15; 16) gelagert sind, die einenends mit dem Deckelteil (6) und anderenends mit dem seitlichen Hilfslenker (10) schwenkbeweglich verbunden sind.

8. Cabriolet-Fahrzeug nach Anspruch 7,
**dadurch gekennzeichnet,**
**daß** jeder karosserieseitig gehaltene seitliche Hilfslenker (10) in Seitenansicht nach Art eines Schwanenhalses ausgebildet ist und die Gelenkanbindungen der Lenker (13:14:15:16) in dessen Kopfbereich liegen.

9. Cabriolet-Fahrzeug nach einem der Ansprüche 7 oder 8,
**dadurch gekennzeichnet,**
**daß** zumindest ein Antriebs- oder antriebsunterstützendes Element (18), insbesondere eine Gasdruckfeder, vorgesehen ist, die das Deckelteil (6) gegenüber dem seitlichen Hilfslenker (10) beweglich abstützt.

10. Cabriolet-Fahrzeug nach einem der Ansprüche 7 bis 9,
**dadurch gekennzeichnet,**
**daß** sich zumindest zwei Lenker (13:14) an einem Schwenkgelenk kreuzen.

11. Cabriolet-Fahrzeug nach einem der Ansprüche 1 bis 10,
**dadurch gekennzeichnet,**
**daß** eine erste Schwenkachse (7), ein durch eine Sollbiegestelle (22) im Deckelteil (6) gebildetes Gelenk (24), Gelenke (13a;13b) eines durchgehenden Lenkers (13) des Mehrgelenks (12) und die Schwenkachse (11) des Hilfslenkers (10) eine Fünfgelenkkette bilden.

## Claims

1. A cabriolet vehicle (1) with a roof (2) which is able to be stored in the rear vehicle area below a lid part (6), wherein the lid part can optionally be opened in order to free a loading aperture for luggage or in order to free an opening for the roof (2) and, for the latter-specified aperture, there are provided a first pivot axis (7) in the area of an aft termination edge of the lid part (6) and lateral auxiliary guides (10) which are attached to at least the longitudinal sides of the vehicle and which are connected to the lid part (6) via hinge connections (12),
**characterised in that**
there is provided, in the lid part (6), a tolerance compensation, which, at least during the swiveling of the lid part (6) in order to free the opening for the roof, brings about a deviation of the path of a part of the lid part (6) from a circular path (20; 21), and wherein the lid part (6) is elastically deformed.

2. A cabriolet vehicle (1) with a roof (2) which is able to be stored in the rear vehicle area below a lid part (6), wherein the lid part can optionally be opened in order to free a loading aperture for luggage or in order to free an opening for the roof (2) and, for the latter-specified aperture, there are provided a first pivot axis (7) in the area of an aft termination edge of the lid part (6) and lateral auxiliary guides (10) which are attached to at least the longitudinal sides of the vehicle and which are connected to the lid part (6) via hinge connections, wherein there is provided, in the hinge connections (12), a tolerance compensation, which at least during the swiveling of the lid part (6) in order to free the opening for the roof brings about a deviation of the path of a part of the hinge connection (12) from a circular path (20; 21),
**characterised in that**
the lid part (6) is hereby elastically deformed.

3. The cabriolet vehicle according to one of Claims 1 or 2,
**characterised in that**
the lid part (6) includes a front termination part (8), which is substantially horizontal in the closed state, and a substantially vertical back termination part (9), wherein the size of the angle between the specified parts (8; 9) can be elastically altered (23) during the movement of the lid part (6).

4. The cabriolet vehicle according to Claim 3,
**characterised in that**
the angle change (23) during the opening movement of the roof part (6) is several degrees.

5. The cabriolet vehicle according to one of Claims 1 to 4,
**characterised in that**
the lid part (6) is held in a deformation-free manner both in the closed state and, for the purposes of freeing the opening for the roof (2), in the fully opened state.

6. The cabriolet vehicle according to one of Claims 1 to 5,
**characterised in that**
the roof part (6) is formed of plastic.

7. The cabriolet vehicle according to one of Claims 1 to 6,
**characterised in that**
the lateral auxiliary guides (10) of the lid part (6) are formed by pivot guides which are mounted on the vehicle body (5) and on which several guides (13; 14; 15; 16), which are pivotably connected to the lid part (6) at one end and to the lateral auxiliary guide (10) at the other end, are respectively mounted as hinge connections (12).

8. The cabriolet vehicle according to Claim 7,
**characterised in that**
each lateral auxiliary guide (10) held at the vehicle body side is configured, in a side view, like a swan neck and the hinge connections of the guides (13; 14; 15; 16) are situated in its head area.

9. The cabriolet vehicle according to one of Claims 7 or 8,
**characterised in that**
at least one drive or drive-assisting member (18), in particular a gas pressure spring, is provided which movably supports the lid part (6) against the lateral auxiliary guide (10).

10. The cabriolet vehicle according to one of Claims 7 to 9,
**characterised in that**
at least two guides (13; 14) intersect at a pivot hinge.

11. The cabriolet vehicle according to one of Claims 1 to 10,
**characterised in that**
a first pivot axis (7), a hinge (24) formed by a target bending point (22) in the lid part (6), hinges (13a; 13b) of a continuous guide (13) of the multiple hinge (12), and the pivot axis (11) of the auxiliary guide (10) form a five-hinge chain.

## Revendications

1. Véhicule cabriolet (1) comprenant un toit (2) pouvant être déposé dans la partie arrière du véhicule au-dessous d'un élément de couvercle (6), étant précisé que l'élément de couvercle peut être ouvert de façon sélective pour la libération d'une ouverture de chargement pour les bagages ou pour la libération d'une ouverture de passage pour le toit (2), et que, pour cette dernière, il est prévu un premier axe de pivotement (7) dans la zone d'un bord de fermeture arrière de l'élément de couvercle (6) ainsi que des bras auxiliaires (10) latéraux affectés au moins aux côtés longitudinaux du véhicule et assemblés avec l'élément de couvercle (6) par l'intermédiaire de liaisons articulées (12),
**caractérisé en ce que**,
dans l'élément de couvercle (6), il est prévu une compensation de tolérances qui provoque un écart de la courbe de trajectoire d'une partie de l'élément de couvercle (6) par rapport à une trajectoire circulaire (20 ; 21), au moins pendant le pivotement de l'élément de couvercle (6) pour la libération de l'ouverture de passage pour le toit, l'élément de couvercle (6) étant alors déformé de façon élastique.

2. Véhicule cabriolet (1) comprenant un toit (2) pouvant être déposé dans la partie arrière du véhicule au-dessous d'un élément de couvercle (6), étant précisé que l'élément de couvercle peut être ouvert de façon sélective pour la libération d'une ouverture de chargement pour les bagages ou pour la libération d'une ouverture de passage pour le toit (2), que, pour cette dernière, il est prévu un premier axe de pivotement (7) dans la zone d'un bord de fermeture arrière de l'élément de couvercle (6) et des bras auxiliaires (10) latéraux affectés au moins aux côtés longitudinaux du véhicule et assemblés avec l'élément de couvercle (6) par l'intermédiaire de liaisons articulées et que, dans les liaisons articulées (12), il est prévu une compensation de tolérances qui provoque un écart de la courbe de trajectoire d'une partie de la liaison articulée (12) par rapport à une trajectoire circulaire (20 ; 21) au moins pendant le pivotement de l'élément de couvercle (6) pour la libération de l'ouverture de passage pour le toit,
**caractérisé en ce que**
l'élément de couvercle (6) est alors déformé de façon élastique.

3. Véhicule cabriolet selon l'une des revendications 1 ou 2,
**caractérisé en ce que**
l'élément de couvercle (6) comprend à l'état fermé un élément de fermeture avant substantiellement horizontal (8) et un élément de fermeture arrière substantiellement vertical (9), la dimension de l'angle formé entre les éléments cités (8 ; 9) pendant le déplacement de l'élément de couvercle (6) pouvant être modifiée (23) élastiquement.

4. Véhicule cabriolet selon la revendication 3,
**caractérisé en ce que**
la modification de l'angle (23) pendant le déplacement d'ouverture de l'élément de couvercle (6) est de plusieurs degrés.

5. Véhicule cabriolet selon l'une des revendications 1 à 4,
**caractérisé en ce que**
l'élément de couvercle (6) est maintenu sans déformation aussi bien à l'état fermé qu'à l'état entièrement ouvert pour la libération de l'ouverture de passage pour le toit (2).

6. Véhicule cabriolet selon l'une des revendications 1 à 5,
**caractérisé en ce que** l'élément de couvercle (6) est réalisé en matière plastique.

7. Véhicule cabriolet selon l'une des revendications 1 à 6,
**caractérisé en ce que**
les bras auxiliaires (10) latéraux de l'élément de couvercle (6) sont formés par des bras pivotants montés sur la carrosserie (5) et sur lesquels sont montés respectivement plusieurs bras (13 ; 14 ; 15 ; 16) sous forme de liaisons articulées (12) qui sont assemblés à une extrémité avec l'élément de couvercle (6) et à l'autre extrémité avec le bras auxiliaire (10) latéral de façon à permettre un mouvement de pivotement.

8. Véhicule cabriolet selon la revendication 7,
**caractérisé en ce que**
chaque bras auxiliaire (10) latéral maintenu sur le côté de la carrosserie est réalisé, selon une vue latérale, sous la forme de col de cygne, et **en ce que** les liaisons articulées des bras (13 ; 14 ; 15 ; 16) sont situées dans la zone de leur tête.

9. Véhicule cabriolet selon l'une des revendications 7 ou 8,
**caractérisé en ce que**
il est prévu au moins un élément (18) moteur ou assisté par un moteur, en particulier un ressort à gaz qui soutient de façon mobile l'élément de couvercle (6) par rapport au bras auxiliaire (10) latéral.

10. Véhicule cabriolet selon l'une des revendications 7 à 9,
**caractérisé en ce que**
au moins deux bras (13 ; 14) se croisent sur une articulation pivotante.

11. Véhicule cabriolet selon l'une des revendications 1 à 10,
**caractérisé en ce que**
un premier axe de pivotement (7), une articulation (24) formée par une zone de courbure théorique (22) dans l'élément de couvercle (6), des articulations (13a ; 13b) d'un bras (13) continu de l'articulation multiple (12) et l'axe de pivotement (11) du bras auxiliaire (10) forment une chaîne à cinq articulations.
